(19) Europäisches Patentamt
European Patent Office
Office européen des brevets

(11) EP 0 864 952 B1

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(51) Int Cl.[7]: **G05B 19/19**, G05B 19/416

(21) Anmeldenummer: **98103799.7**

(22) Anmeldetag: **04.03.1998**

(54) **Verfahren zur Bearbeitung eines Werkstücks mit maximaler Bearbeitungsgeschwindigkeit**

Method for machining a workpiece with maximum machining rate

Methode pour usiner une pièce avec une vitesse d'usinage maximale

(84) Benannte Vertragsstaaten:
**DE FR GB IT**

(30) Priorität: **13.03.1997 DE 19710268**

(43) Veröffentlichungstag der Anmeldung:
**16.09.1998 Patentblatt 1998/38**

(73) Patentinhaber: **Dr. Johannes Heidenhain GmbH**
**83292 Traunreut (DE)**

(72) Erfinder:
- **Haunerdinger, Josef**
  **83377 Vachendorf (DE)**
- **Rauth, Michael, Dipl.-Ing.**
  **83301 Traunreut (DE)**
- **Pastetter, Ludwig, Dipl.-Phys.**
  **84529 Törring (DE)**
- **Zacek, Johann**
  **83552 Evenhausen (DE)**

(56) Entgegenhaltungen:
**EP-A- 0 187 864**
**EP-A- 0 378 708**
**EP-A- 0 469 617**
**US-A- 4 603 286**
**US-A- 5 159 250**
**US-A- 5 351 205**
**US-A- 5 392 217**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Bearbeitung eines Werkstücks mit maximaler Bearbeitungsgeschwindigkeit im Bereich einer Kante.

Aus der EP 187 864 A1 ist ein Kontrollsystem für die Beschleunigung und Verzögerung eines Elektromotors einer Werkzeugmaschine oder eines Roboters bekannt. Dabei wird in einem ersten Schritt durch eine erste Baugruppe das Steuersignal für die Geschwindigkeit eines Elektromotors derart verändert, daß es im wesentlichen nicht mehr den Verlauf einer Sprungfunktion, sondern eine konstante, endliche Steigung auch an den Schaltflanken aufweist und dadurch eine lineare Beschleunigung und Verzögerung bewirkt. In einem zweiten Schritt und in einer zweiten Baugruppe wird das Ausgangssignal der ersten Baugruppe weiter verändert. Das Steuersignal wird derart verändert, daß es einen exponentiellen Verlauf aufweist, wodurch auch Beschleunigung und Verzögerung des Elektromotors exponentiell erfolgen. Dadurch werden plötzliche Änderungen der Beschleunigung und Verzögerung des Elektromotors verhindert.

Dabei ist von Nachteil, daß zwei relativ komplizierte Filter erforderlich sind, um auch für Anwendungsfälle, bei denen eine hohe Genauigkeit gefordert wird, eine möglichst kontinuierliche Beschleunigung und Verzögerung des Elektromotors zu gewährleisten. Weiterhin ist von Nachteil, daß die Filtercharakteristik durch die verwendeten Filter fest vorgegeben ist. Eine Berücksichtigung von für jeden Anwendungsfall individuellen Kenndaten für den gewünschten Geschwindigkeitsverlauf ist daher nicht möglich.

Aus der EP 0 378 708 A1 ist eine Anordnung zur Steuerung der Beschleunigung und Verzögerung für einen Servo-Motor, beispielsweise einer Werkzeugmaschine, bekannt. Dabei besteht die Aufgabe darin, daß Vibrationen des Servo-Motors vermieden werden, die bei großen Beschleunigungs- oder Verzögerungswerten auftreten. Hierfür sind drei in Reihe geschaltete Filter vorgesehen, von denen der erste Filter das Steuersignal für die Geschwindigkeit des Servo-Motors derart formt, daß die Geschwindigkeit des Elektromotors einen sprungfreien Verlauf aufweist. Das zweite Filter formt das Ausgangssignal des ersten Filters derart, daß die Beschleunigung des Elektromotors einen sprungfreien Verlauf aufweist, und das dritte Filter formt das Ausgangssignal des zweiten Filters derart, daß der Ruck des Elektromotors einen sprungfreien Verlauf aufweist. Die dabei verwendeten Filter weisen die gleiche Grundstruktur auf und bestehen aus mehreren in Reihe geschalteten Verzögerungsstufen, deren Ausgangssignale aufsummiert werden und das derart erhaltene Signal gewichtet wird.

Auch diese Anordnung weist den Nachteil auf, daß mehrere Filter mit vielen Verzögerungsstufen erforderlich sind. Dadurch wird die Filteranordnung insgesamt teuer und kompliziert. Weiterhin verringert sich durch die vielen Verzögerungsstufen die Bearbeitungsgeschwindigkeit wesentlich. Ein weiterer Nachteil besteht darin, daß die Filter nicht an den konkreten Anwendungsfall angepaßt werden können. Dadurch ist a priori eine komplexe Filterstruktur erforderlich, um auch Anwendungen mit hohen Anforderungen an die Präzision erfüllen zu können. Dadurch erhöht sich der schaltungstechnische Aufwand und die Verarbeitungsgeschwindigkeit sinkt.

In der US 531205 ist ein weiteres Verfahren zur Filterung digitaler Signale offenbart, welches z.B. zur numerischen Steuerung von Werkzeugmaschinenachsen verwendet wird. Angestrebt wird darüber eine Glättung der von der numerischen Steuerung berechneten digitalen Gechwindigkeitssollwerte, um übermäßige Stoßbeanspruchungen der angetriebenen Achsen zu vermeiden. Insbesondere wird in dieser Druckschrift beschrieben, wie während einer Achsbewegung für unterschiedliche Belastungen auch unterschiedliche Filterlängen des verwendeten Filters eingestellt werden. Unterschiedliche Filterlängen sind hierbei aufgrund unterschiedlicher Anforderungen an die jeweilige Bahnbewegung vorgesehen. Beispielsweise erfordert die Bahnbewegung eines Roboters eine bessere Glättung respektive eine größere Filterlänge als etwa eine einfache Punkt-zu-Punkt-Bewegung, für die zur Glättung eine geringere Filterlänge ausreicht.

Es ist die Aufgabe der vorliegenden Erfindung ein Verfahren anzugeben, durch das eine maximale Bearbeitungsgeschwindigkeit für eine Werkzeugmaschine im Bereich von Kanten eines Werkstücks möglich wird, abhängig von vorgegebenen Betriebsparametern, wie Toleranz, Ruck und 8eschleunigung.

Diese Aufgabe wird durch die Merkmale des Anspruchs 1 gelöst.

Vorteilhafte Ausgestaltungen können den abhängigen Ansprüchen entnommen werden.

Das erfindungsgemäße Verfahren ermöglicht vorteilhaft die Bearbeitung eines Werkstücks mit maximaler Bearbeitungsgeschwindigkeit dadurch, daß im Rahmen der zulässigen Betriebsparameter, wie zulässige Toleranz, Beschleunigung und Ruck, eine Anpassung der Werkstückkontur mittels eines in Abhängigkeit von den Betriebsparametern ermittelten FIR-Filters erfolgt. Es wird ein FIR-Filter für die vorliegende Aufgabe ermittelt, das im Hinblick auf die einzuhaltenden Betriebsparameter die mindestens erforderliche Ordnung aufweist. Aufgrund der besonders einfachen Berechnung der Filterordnung und der Filterkoeffizienten sowie aufgrund der Tatsache, daß dieses Filter nur bei Änderung der Betriebsparameter neu berechnet werden muß, ist eine besonders schnelle Signalverarbeitung gewährleistet. Weiterhin vorteilhaft ist, daß zusätzlich zu der Bearbeitungsgeschwindigkeit an der Kante auch die Bearbeitungsgeschwindigkeit in Teilen der Bahnkurve abhängig von den zulässigen Betriebsparametern bestimmt wird. Das erfindungsgemäße Verfahren kann dabei die bereits vorhandenen Baugruppen mitbenutzen.

Das erfindungsgemäße Verfahren soll nun anhand der Zeichnungen näher beschrieben und erläutert werden. Es zeigen:

Fig. 1: eine mögliche Bahnkurve s(t) eines Werkstücks mit einer senkrecht zur x-Achse verlaufende Kante, eine Folge s(m) von Koordinaten der abgetastete Bahnkurve des Werkstücks und eine Folge $\bar{s}$ (m) von Koordinaten der abgetastete Bahnkurve nach der FIR-Filterung,
Fig. 2: eine mögliche schaltungstechnische Realisierung des erfindungsgemäßen FIR-Filters und
Fig. 3: einen möglichen Verlauf der Bearbeitungsgeschwindigkeit senkrecht zur Kante.

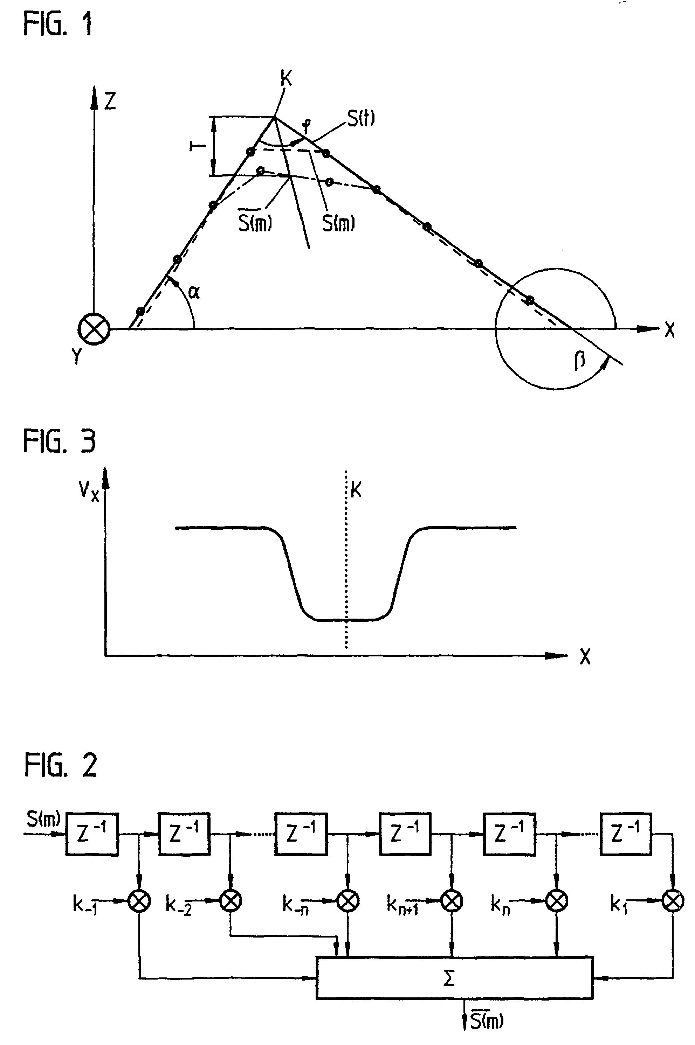

In Fig. 1 ist ein möglicher Verlauf einer Bahnkurve s(t) eines Werkstücks im Detail dargestellt. Dabei erfolgt zur Vereinfachung der Darstellung die Bearbeitung des Werkstücks durch die Werkzeugmaschine in Richtung der x-Achse, in der durch die x- und z-Achse aufgespannten Ebene. Die Kante K verläuft dann parallel zur y-Achse. Im allgemeinen werden aber Bearbeitungsrichtung und Kantenverlauf nicht mit Achsen der Werkzeugmaschine zusammenfallen. Die Kante K wird durch den Winkel φ definiert, der von dem zur Kante K hinführenden Teil der Bahnkurve und von dem von der Kante K wegführenden Teil der Bahnkurve eingeschlossen wird.

Bei der Programmierung einer Werkzeugmaschine wird eine gewünschte Bahnkurve s(t) eines Werkstücks eingegeben, die aufgrund der endlichen Regelgeschwindigkeit als eine Folge von diskreten Abtastwerten s(m) der Bahnkurve durch die Steuerung abgearbeitet wird. Dabei sind die Abtastwerte s(m) immer eine Regelzykluszeit $T_z$ voneinander entfernt. Eine Steuerung steuert die Antriebe der x- und z-Achse der Werkzeugmaschine derart, daß die einzelnen Abtastwerte s(m) nacheinander angefahren werden. Dadurch wird die gewünschte Bahnkurve s(t) im Rahmen einer gewissen Toleranz am Werkstück erzeugt.

Bei einer derartigen Bearbeitung eines Werkstücks ist selbstverständlich eine möglichst hohe Bearbeitungsgeschwindigkeit v erwünscht, die aber unter anderem durch die maximal mögliche Beschleunigung $a_{max}$ und den maximal möglichen Ruck $r_{max}$ in den einzelnen Achsen sowie die maximal zulässige Toleranz T begrenzt wird. Diese Vorgaben führen insbesondere an Kanten K bei konstanter Bearbeitungsgeschwindigkeit v zu einer Verschlechterung der Toleranz T, die am Schnittpunkt der Winkelhalbierenden des Kantenwinkels φ mit der gefilterten Bahnkurve $\bar{s}$ (m) bestimmt wird. Da die Toleranz T in der Regel aber zwingend eingehalten werden muß, wird an einer Kante K die abgetastete Bahnkurve s(m) im Rahmen der zulässigen Toleranz T geringfügig verändert, um eine größere Bearbeitungsgeschwindigkeit v zu ermöglichen. Dennoch kann es erforderlich sein, die Bearbeitungsgeschwindigkeit v zu verringern, um die Betriebsparameter einzuhalten.

Die Veränderung der abgetasteten Bahnkurve s(m) wird durch eine Filterung mittels eines FIR-Filters gemäß Gleichung (1) erreicht. Die neue gefilterte Bahnkurve $\bar{s}$(m) ist dadurch derart geformt, daß an Kanten K der in der Werkzeugmaschine gespeicherten abgetasteten Bahnkurve s(m) insbesondere die Betriebsparameter für den maximal zulässigen Ruck $r_{max}$ und die erforderliche Toleranz T eingehalten werden, ohne daß die Bearbeitungsgeschwindigkeit v mehr als nach den Umständen erforderlich verringert werden muß. In Gleichung (1) ist m ein diskreter Zeitparameter, zu dem die ursprüngliche Bahnkurve s(t) abgetastet wurde, N ist die Ordnung des Filters, i eine ganzzahlige Variable, $k_i$ ein Filterkoeffizient und $T_z$ die Regelzykluszeit des Regelkreises für die Bearbeitungsgeschwindigkeit v.

$$\bar{s}(m) = \sum_{i=-N}^{N} k_i s(m + iT_z) \qquad (1)$$

Um eine optimale Anpassung des verwendeten FIR-Filters an die zu bearbeitende Kante K zu realisieren, wird die Ordnung N des benutzten FIR-Filters gemäß der Ungleichung (2) so berechnet, daß das FIR-Filter die niedrigst mögliche Ordnung N aufweist, mit der die maximal zulässigen Werte für Toleranz T und Ruck $r_{max}$ bei gegebener Regelzykluszeit $T_z$ nicht überschritten werden.

$$N(N+1)(N+2) \geq \frac{|\cos\alpha - \cos\beta| * 6T}{2\cos\frac{\varphi}{2} * r_{max} T_z^3} \qquad (2)$$

Dabei ist φ der Kantenwinkel, der von dem zur Kante K hinführenden und von dem von der Kante K wegführenden Teil der Bahnkurve s(t) eingeschlossen wird; weiterhin ist cosα und cosβ der Richtungscosinus und α der Winkel, der von dem Teil der zur Kante K hinführenden Bahnkurve s(t) und einer Achse eingeschlossen wird, und β der Winkel, der von dem von der Kante K wegführenden Teil der Bahnkurve s(t) und der gleichen Achse eingeschlossen wird. Der Wert N kann für alle drei Achsen berechnet werden und wird anschließend gemittelt und auf einen ganzzahligen Wert gerundet. In der Regel ergibt sich für x-, y- oder z-Achse der gleiche Wert N. Die Wahl der niedrigst möglichen Ordnung N vereinfacht das FIR-Filter und verringert die durch das FIR-Filter auftretenden Verzögerungen, wodurch wiederum die Bearbeitungsgeschwindigkeit v gesteigert wird. Weiterhin wird dadurch auch die Genauigkeit der gefilterten Bahnkurve $\bar{s}$ (m) erhöht.

Da für unterschiedliche Bahnkurven s(m) oder auch für Teile davon unterschiedliche Toleranzen T gefordert werden können, erfolgt immer dann eine Berechnung der Ordnung N des erforderlichen FIR-Filters, wenn andere Anforderungen an Ruck $r_{max}$ oder Toleranz T gestellt werden. Bereits berechnete FIR-Filter, insbesondere wenn mehrere FIR-Filter für ein mehrfach zu fertigendes Werkstück berechnet werden müssen, können in einem Speicher gespeichert werden, mit dem die Steuerung verbunden ist.

Bei der Wahl der Koeffizienten $k_i$für das FIR-Filter hat es sich als günstig erwiesen, wenn diese nach der Gleichung (3) bestimmt werden.

$$k_i = \frac{(N + 1) - i}{(N + 1)^2} \text{ für alle i = 0, ... , N und } k_{-i} = k_i \tag{3}$$

Durch die derart berechneten Filterkoeffizienten $k_i$ wird ein sogenanntes Dreiecksfilter realisiert. Dieses weist eine Tiefpaßcharakteristik mit schwächerer Gewichtung der vom berechneten Sollwert weiter entfernt liegenden Werte s(m) der Bahnkurve auf.

In Fig. 2 ist eine mögliche Filterstruktur dargestellt, die aus einer Reihenschaltung von Verzögerungsgliedern besteht, deren Ausgangssignale mit den Filterkoeffizienten $k_i$ gewichtet und aufsummiert werden. Das Eingangssignal s(m) wird durch dieses FIR-Filter in ein Ausgangssignal $\bar{s}$ (m) umgewandelt, das die geforderten Betriebsparameter einhält, aber eine größere Bearbeitungsgeschwindigkeit v ermöglicht.

Zusätzlich zur FIR-Filterung der abgetasteten Bahnkurve s(m) wird die Bearbeitungsgeschwindigkeit v derart verringert, daß die Betriebsparameter maximale Toleranz T, maximaler Ruck $r_{max}$ und maximale Beschleunigungen $a_{max}$ und $a_{z.max}$ nicht überschritten werden.

Aufgrund der vom Benutzer eingebbaren maximal zulässigen Toleranz T ergibt sich eine erste maximale Bearbeitungsgeschwindigkeit v, die wie folgt berechnet wird:

$$v \le \frac{1}{2 \cos \frac{\varphi}{2}} * \frac{T}{T_z} * \frac{6(N + 1)}{N(N + 2)} \tag{4}$$

In diese Berechnung gehen Filterordnung N, Kantenwinkel φ, Toleranz T und Regelzykluszeit $T_z$ ein.

In Abhängigkeit vom maximalen Ruck $r_{i,max}$ in der Achse i berechnet sich eine zweite maximale Bearbeitungsgeschwindigkeit v für die Achse i wie folgt:

$$v \le r_{i.max}(N + 1)^2 T_z^2 \Big/ \left|\cos \alpha_i - \cos \beta_i\right| \tag{5}$$

Dabei wird der Nenner durch den Richtungscosinus einer Achse i bestimmt, wie er bereits oben erläutert wurde.

Eine dritte maximale Bearbeitungsgeschwindigkeit wird abhängig von der maximal zulässigen Beschleunigung $a_{i,max}$ für jede Achse i nach der folgenden Gleichung berechnet:

$$v \le a_{i.max}(N + 1)T_z \Big/ \left|\cos \alpha_i - \cos \beta_i\right| \tag{6}$$

Eine vierte maximale Bearbeitungsgeschwindigkeit v wird abhängig von der maximal zulässigen Zentrifugalbeschleunigung $a_{z,max}$ berechnet.

$$v \leq \sqrt{\frac{a_{z,\max} L}{2 \sin\frac{180° - \varphi}{2}}} \qquad (7)$$

Dabei ist L der Abstand zwischen zwei aufeinander folgenden Punkten s(l) und s(l+1) der Bahnkurve s(m). Aus den vier maximalen Bearbeitungsgeschwindigkeiten v gemäß den Ungleichungen (4), (5), (6), (7) wird anschließend die niedrigste ausgewählt und zur Steuerung der Vorschübe der einzelnen Achsen der Werkzeugmaschine benutzt. Dies stellt sicher, daß die maximal zulässigen Werte für Toleranz T, Ruck r, Beschleunigung a und Zentrifugalbeschleunigung $a_z$ nicht überschritten werden.

Dabei ist es vorteilhaft, daß die aufgrund der Zentrifugalbeschleunigung $a_z$ berechnete Bearbeitungsgeschwindigkeit v für mehrere Abtastwerte s(m) der Bahnkurve im voraus berechnet wird, so daß einzelne, besonders niedrige oder auch hohe Werte für die Bearbeitungsgeschwindigkeit v an die übrigen Werte angepaßt werden, wodurch niedrige Bearbeitungsgeschwindigkeiten v geringfügig erhöht und zu groß Berarbeitungsgeschwindigkeiten v geringfügig verringert werden.

Um optimale Arbeitsergebnisse zu erreichen, ist es weiterhin vorteilhaft, daß in einem engen Bereich um die Kante K, der durch die Regelzykluszeit $T_z$ festgelegt wird, die ermittelte Bearbeitungsgeschwindigkeit v konstant auf dem für die Kante K berechneten niedrigen Wert verharrt. Die Regelzykluszeit $T_z$ wird dabei durch den Regelkreis der Steuerung der Werkzeugmaschine definiert, der zur Regelung der Bearbeitungsgeschwindigkeit v benutzt wird. Dadurch wird sichergestellt, daß unmittelbar an der Kante K bereits die berechnete verringerte Bearbeitungsgeschwindigkeit v erreicht wurde.

Der Bereich um die Kante K kann durch $T_z$ oder $(2N+1)T_z$ vor und nach der Kante K festgelegt werden.

Fig. 3 zeigt der Verlauf der Bearbeitungsgeschwindigkeit v in der x-Achse. Die Bearbeitungsgeschwindigkeit $v_x$ wird mit einem kontinuierlichen Übergang reduziert, um an der Kante K die Betriebsparameter einhalten zu können.

Ein derartiges Verfahren wird vorteilhaft durch einen digitalen Prozessor gesteuert, der als Steuereinheit benutzt wird und die erforderlichen Berechnungen durchführt. Der Prozessor ist mit einem Speicher verbunden, in dem berechnete FIR-Filter gespeichert werden können.

## Patentansprüche

1. Verfahren zur Bearbeitung eines Werkstücks auf einer Werkzeugmaschine mit maximaler Bearbeitungsgeschwindigkeit im Bereich einer Kante (K), wobei ein Steuersignal durch Filtern einer Bahnkurve s(m) mittels eines FIR-Filters geformt wird, wodurch ein möglichst kontinuierlicher Verlauf der Geschwindigkeit (v) realisiert wird und abhängig von vorgegebenen Betriebsparametern die Ordnung (N) des FIR-Filters bestimmt wird, durch welches im Bereich der Kante (K) die Kontur des Werkstücks geformt wird und im Fall anderer Anforderungen an die Betriebsparameter die Neuberechnung der Ordnung (N) des FIR-Filters erfolgt und ferner für eine bestimmte Dauer vor und hinter einer Kante (K) die Bearbeitungsgeschwindigkeit (v) auf eine für die Kante (K) berechnete Bearbeitungsgeschwindigkeit (v) verringert wird, wobei die Bearbeitungsgeschwindigkeit abhängig von den zulässigen Betriebsparametern berechnet wird.

2. Verfahren nach Anspruch 1, wobei der Betriebsparameter maximale Toleranz vom Benutzer eingegeben wird und die Betriebsparameter maximaler Ruck und maximale Beschleunigung in vorgegebenen Grenzen vom Benutzer verändert werden können.

3. Verfahren nach Anspruch 1 oder 2, wobei die Untergrenze der Filterordnung (N) durch die Ungleichung

$$N(N+1)(N+2) \geq \frac{|\cos\alpha - \cos\beta| * 6T}{2\cos\frac{\varphi}{2} * r_{\max} T_z^3}$$

bestimmt wird, and die Obergrenze der Filterordnung (N) aus der Forderung bestimmt wird, dass die Filterordnung (N) möglichst niedrig sein soll.

4. Verfahren nach einem der Ansprüche 1 bis 3, wobei die Koeffizienten $k_i$ der Filterfunktion

$$\tilde{s}(m) = \sum_{i=-N}^{N} k_i s(m + iT_z)$$

des verwendeten FIR-Filters der Ordnung (N) nach den Gleichungen

$$k_i = \frac{(N+1) - i}{(N+1)^2}$$

mit i = 0,..., N und $k_{-i} = k_i$ bestimmt werden.

**5.** Verfahren nach Anspruch 2, wobei die maximale Bearbeitungsgeschwindigkeit (v) abhängig von der maximalen Toleranz (T) nach der Ungleichung

$$v \leq \frac{1}{2\cos\frac{\varphi}{2}} * \frac{T}{T_z} * \frac{6(N+1)}{N(N+2)}$$

berechnet wird und weiterhin die maximale Bearbeitungsgeschwindigkeit (v) abhängig von dem maximalen Ruck ($r_{i,max}$) in jeder Achse (i) nach der Ungleichung

$$v \leq r_{i,max}(N+1)^2 T_z^2 \Big/ \left|\cos\alpha_i - \cos\beta_i\right|$$

berechnet wird und die niedrigere der beiden berechneten Bearbeitungsgeschwindigkeiten (v) durch das Steuersignal eingestellt wird.

**6.** Verfahren nach Anspruch 5, wobei die maximale Geschwindigkeit (v) zusätzlich abhängig von der maximalen Beschleunigung ($a_i$) nach der Ungleichung

$$v \leq a_{i,max}(N+1)T_z \Big/ \left|\cos\alpha_i - \cos\beta_i\right|$$

berechnet wird und die niedrigste der für die unterschiedlichen Betriebsparameter berechneten Bearbeitungsgeschwindigkeiten (v) eingestellt wird.

**7.** Verfahren nach Anspruch 5 oder 6, wobei die maximale Bearbeitungsgeschwindigkeit (v) zusätzlich abhängig von der maximalen Zentrifugalbeschleunigung ($a_{z,max}$) nach der Ungleichung

$$v \leq \sqrt{\frac{a_{z,max}L}{2\sin\frac{180° - \varphi}{2}}}$$

berechnet wird, wobei L den Abstand zwischen zwei von der Steuerung berechneten Punkten s(l) und s(l+1) der Bahnkurve s(m), sowie $a_{z,max}$ die maximal zulässige Zentrifugalbeschleunigung angibt und die niedrigste der für die unterschiedlichen Betriebsparameter berechneten Bearbeitungsgeschwindigkeiten (v) eingestellt wird.

**8.** Verfahren nach Anspruch 7, wobei die aufgrund der maximal zulässigen Zentrifugalbeschleunigung $a_{z,max}$ berechnete Geschwindigkeit (v) für mehrere aufeinander folgende Bahnpunkte s(m) im voraus berechnet wird und besonders niedrige Geschwindigkeitswerte an hohe angeglichen werden, wodurch kurzfristige Minimalwerte der Bearbeitungsgeschwindigkeit (v) vergrößert werden.

**9.** Verfahren nach Anspruch 1, wobei der für eine bestimmte Kombination von Betriebsparametern bestimmte FIR-Filter in einem Speicher gespeichert wird.

## Claims

**1.** Method for machining a workpiece on a machine tool at maximum machining rate in the region of an edge (K), wherein a control signal is shaped by filtering a path line s(m) by means of an FIR filter, by which means as continuous as possible a course of the rate (v) is realised and, in dependence on preset operating parameters, the order (N) of the FIR filter is determined, by which the contour of the workpiece is shaped in the region of the edge (K), and in the case of other requirements of the operating parameters, the order (N) of the FIR filter is calculated anew, and furthermore for a specific period in front of and behind an edge (K) the machining rate (v) is reduced to a machining rate (v) calculated for the edge (K), the machining rate being calculated in dependence on the admissible operating parameters.

**2.** Method according to claim 1, wherein the operating parameter of maximum tolerance is input by the user and the operating parameters of maximum jerk and maximum acceleration can be altered by the user within preset limits.

**3.** Method according to claim 1 or 2, wherein the lower limit of the filter order (N) is determined by the inequation

$$N(N+1)(N+2) \geq \frac{|\cos\alpha - \cos\beta| * 6T}{2\cos\frac{\varphi}{2} * r_{max} T_z^{\,3}}$$

and the upper limit of the filter order (N) is determined from the demand that the filter order (N) should be as low as possible.

**4.** Method according to one of claims 1 to 3, wherein the coefficients $k_1$ of the filter function

$$\bar{s}(m) = \sum_{i=-N}^{N} k_i s(m + iT_z)$$

of the applied FIR filter of order (N) are determined according to the equations

$$k_i = \frac{(N+1) - i}{(N+1)^2}$$

where i = 0, ..., N and $k_{-i} = k_i$.

**5.** Method according to claim 2, wherein the maximum machining rate (v) is calculated in dependence on the maximum tolerance (T) according to the inequation

$$v \leq \frac{1}{2\cos\frac{\varphi}{2}} * \frac{T}{T_z} * \frac{6(N+1)}{N(N+2)}$$

and furthermore the maximum machining rate (v) is calculated in dependence on the maximum jerk ($r_{i,max}$) in each axis (i) according to the inequation

$$v \leq r_{i,max}(N+1)^2 T_z^2 \Big/ |\cos\alpha_i - \cos\beta_i|$$

and the lower of the two calculated machining rates (v) is set by the control signal.

**6.** Method according to claim 5, wherein the maximum rate (v) is additionally calculated in dependence on the maximum acceleration ($a_i$) according to the inequation

$$v \leq a_{i,max}(N+1)T_z \ / |\cos\alpha_i - \cos\beta_i|$$

and the lowest of the machining rates (v) calculated for the different operating parameters is set.

**7.** Method according to claim 5 or 6, wherein the maximum machining rate (v) is additionally calculated in dependence on the maximum centrifugal acceleration ($a_{z,max}$) according to the inequation

$$v \leq \sqrt{\frac{a_{z,max}L}{2\sin\frac{180°-\varphi}{2}}}$$

wherein L indicates the distance between two points s(l) and s(l+1) of the path line s(m), and $a_{z,max}$ indicates the maximum admissible centrifugal acceleration and the lowest of the machining rates (v) calculated for the different operating parameters is set.

**8.** Method according to claim 7, wherein the rate (v), calculated on the basis of the maximum admissible centrifugal acceleration $a_{z,max}$, for a plurality of path points s(m) following one another is calculated in advance and particularly low rate values are adjusted to high ones, by which means short-term minimum values of the machining rate (v) are increased.

**9.** Method according to claim 1, wherein the FIR filter intended for a specific combination of operating parameters is stored in a memory.

**Revendications**

**1.** Procédé pour l'usinage d'une pièce sur une machine-outil à la vitesse d'usinage maximale dans la région d'une arête (K), dans lequel on forme un signal de commande par filtrage d'une trajectoire s(m) au moyen d'un filtre FIR, ce qui permet d'obtenir une évolution aussi progressive que possible de la vitesse, en fonction de paramètres de fonctionnement prédéterminés on fixe l'ordre (N) du filtre FIR à l'aide duquel le contour de la pièce dans la région de l'arête (K) est façonné, et dans le cas d'exigences différentes au niveau des paramètres de fonctionnement on procède à un nouveau calcul de l'ordre (N) du filtre FIR et, pour une durée déterminée avant et après une arête (K), on abaisse la vitesse d'usinage (v) à une vitesse d'usinage (v) calculée pour l'arête (K), la vitesse d'usinage étant calculée en fonction des paramètres de fonctionnement admissibles.

**2.** Procédé selon la revendication 1, dans lequel le paramètre de fonctionnement tolérance maximale est entré par l'utilisateur et les paramètres de fonctionnement à-coup maximal et accélération maximale peuvent être modifiés par l'utilisateur, à l'intérieur de limites données.

**3.** Procédé selon la revendication 1 ou 2, dans lequel le seuil inférieur pour l'ordre du filtre (N) est déterminé par l'inégalité

$$N(N+1)(N+2) \geq \frac{|\cos\alpha - \cos\beta| * 6T}{2\cos\frac{\varphi}{2} * r_{max} T_z^{\ 3}}$$

et le seuil supérieur pour l'ordre du filtre (N) est déterminé par la condition selon laquelle l'ordre du filtre (N) doit aussi petit que possible.

**4.** Procédé selon une des revendications 1 à 3, dans lequel les coefficients $k_i$ de la fonction de filtre

$$\bar{s}(m) = \sum_{i=-N}^{N} k_i s(m - iT_2)$$

du filtre FIR utilisé d'ordre (N) sont déterminés d'après les équations

$$k_i = \frac{(N + 1) - i}{(N + 1)^2}$$

avec i = 0, ..., N et $k_{-i}$ $k_i$.

**5.** Procédé selon la revendication 2, dans lequel la vitesse d'usinage (v) maximale est calculée en fonction de la tolérance maximale (T) d'après l'inégalité

$$v \leq \frac{1}{2\cos\frac{\varphi}{2}} * \frac{T}{T_z} * \frac{6(N + 1)}{N(N + 2)}$$

et en outre la vitesse d'usinage (v) maximale est calculée en fonction de l'à-coup maximal ($r_{i,\,max}$) suivant chaque axe (i) d'après l'inégalité

$$v \leq r_{i,\max}(N+1)^2 T_z^2 \Big/ \left|\cos\alpha_i - \cos\beta_i\right|$$

et la plus faible des deux vitesses d'usinage (v) calculées est réglée à l'aide du signal de commande.

**6.** Procédé selon la revendication 5, dans lequel la vitesse (v) maximale, en plus, est calculée en fonction de l'accélération maximale ($a_i$) d'après l'inégalité

$$v \leq a_{i,\max}(N+1)T_z \Big/ \left|\cos\alpha_i - \cos\beta_i\right|$$

et la plus faible des vitesses d'usinage (v) calculées pour les différents paramètres de fonctionnement est réglée.

**7.** Procédé selon la revendication 5 ou 6, dans lequel la vitesse d'usinage (v) maximale est calculée en plus en fonction de l'accélération centrifuge maximale ($a_{z,\,max}$) d'après l'inégalité

$$v \leq \sqrt{\frac{a_{z,\max} L}{2\sin\frac{180° - \varphi}{2}}}$$

L indiquant la distance entre deux points (s(l) et s(l+1) de la courbe s(m) et $a_{z,max}$ étant l'accélération centrifuge maximale, et la plus faible des vitesses d'usinage (v) calculées pour les différents paramètres de fonctionnement est réglée.

**8.** Procédé selon la revendication 7, dans lequel la vitesse d'usinage (v) calculée sur la base de l'accélération centrifuge ($a_{z,\,max}$) maximale admissible est calculée à l'avance pour plusieurs points consécutifs de la courbe s(m) et les valeurs de vitesse particulièrement basses sont adaptées aux vitesses élevées, grâce à quoi les valeurs minimales, de courte durée, pour la vitesse d'usinage (v) sont augmentées.

**9.** Procédé selon la revendication 1, dans lequel le filtre FIR conçu pour une combinaison donnée de paramètres de fonctionnement est mémorisé dans une mémoire.

FIG. 1

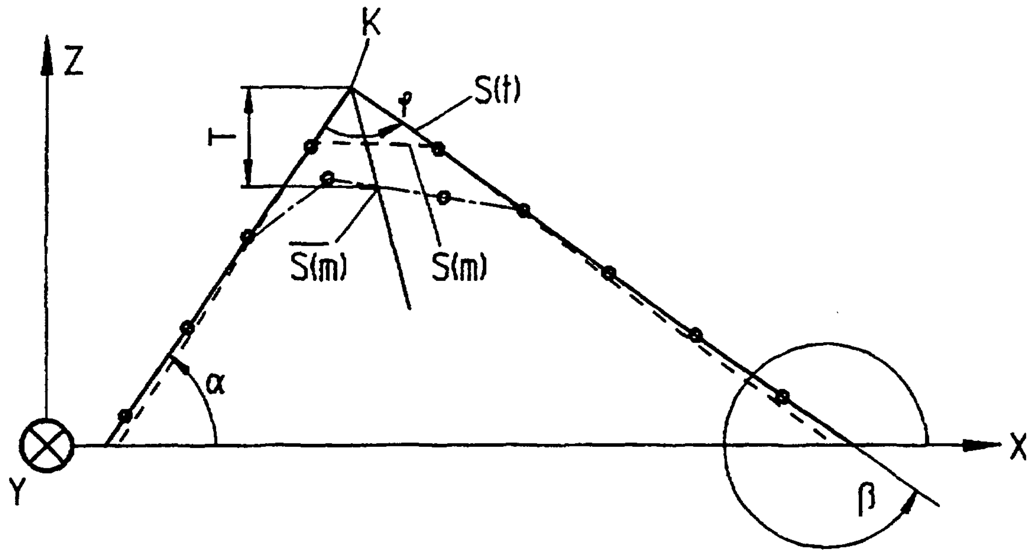


FIG. 3

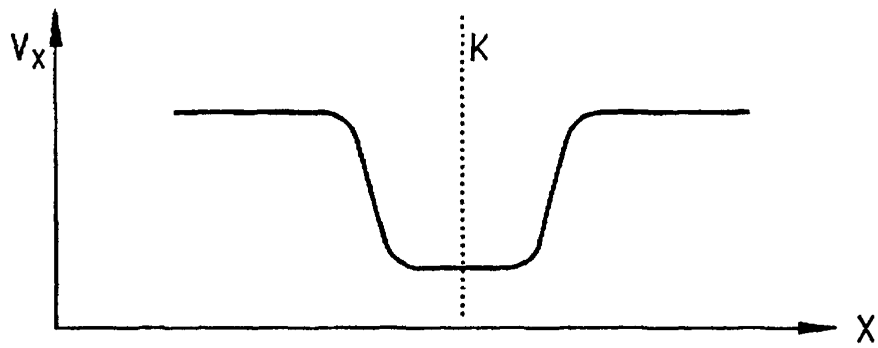


FIG. 2